# EUROPEAN PATENT SPECIFICATION

(11) **EP 4 189 169 B1**
(45) Date of publication and mention of the grant of the patent: **04.09.2024**
(21) Application number: 21749736.1
(22) Date of filing: 27.07.2021
(51) Int. Cl.: E02B 15/10

(54) **DEVICE AND METHOD FOR COLLECTING A SUBSTANCE FROM A LIQUID SURFACE**
VORRICHTUNG UND VERFAHREN ZUM SAMMELN EINER SUBSTANZ VON EINER FLÜSSIGKEITSOBERFLÄCHE
DISPOSITIF ET PROCÉDÉ PERMETTANT DE COLLECTER UNE SUBSTANCE À PARTIR D'UNE SURFACE DE LIQUIDE

(30) Priority: 28.07.2020 NL 2026150
(43) Date of publication of application: 07.06.2023
(73) Proprietor: Hytrans Beheer B.V., 8531 AA Lemmer (NL)
(72) Inventor: TAMMINGA, Jacobus, 8861 NW Harlingen (NL)
(74) Representative: Arnold & Siedsma
(86) International application number: PCT/NL2021/050479
(87) International publication number: WO 2022/025764

(56) References cited:
- WO-A1-2013/112047
- KR-A- 20120 054 910
- NL-B1- 2 018 452
- US-A1- 2017 268 192

## Description

The present invention relates to a device for collecting a substance, such as crude oil from a surface of a first liquid. The invention further relates to a method for collecting a substance from a surface of a first liquid.

Collecting a substance from a liquid surface, such as cleaning up an oil spill, is often done as quick and efficient as possible to lessen the environmental and ecological impact of an oil spill as much as possible. It is clear that the liquid surface denotes the layer of liquid on top of which the substance or a mixture of the substance and the liquid is present.

To remove a substance from the water surface, a variety of oil removal apparatus have been developed. Apparatus to remove substances from a water surface are generally known as skimmers.

WO 2013/112047 A1 discloses an apparatus for collecting a lighter fraction floatable liquid from a heavier fraction liquid, such as a lighter fraction floating oil from a heavier fraction water, the apparatus comprising: a floatable collecting container and a cover placed above the collecting container leaving a continuous passage slot free; wherein the opening of the passage slot is adjustable by an inlet adjustment ring. The invention also provides a method to operate such an apparatus.

US 2017/0268192 A1 discloses a floatable-material harvester, including vacuum source, transport hose, and a floatable-material receiver.

KR 2012 005491 0 A discloses a degreasing apparatus to easily suck and remove even hardened grease by melting the grease with steam.

One type of skimmer is known from NL2018452. This known skimmer comprises a container with an open top side and a drain positioned at least a distance from the open top side, and the skimmer further comprises at least one pump connected with the substance drain and the skimmer is configured for removing a mixture collected in the container. The skimmer further comprises a float for providing buoyancy to the skimmer which at least partly covers the open top side and which is configured to be positioned at least a distance from the open top side, wherein an inlet canal is comprised between the open top side and the float. When positioned correctly, a mixture of oil and water will be let into the top opening and be drained by the pump.

However, often problems occur when a draft of the skimmer is not well adapted to the circumstances or when the layer of substance on the liquid surface is particularly thin. In these cases the inlet canal can be positioned below the layer of substance or above the surface, causing the skimmer to drain only water or to drain nothing at all. This is especially problematic when an oil spill occurs in a remote region, wherein the substance needs to be drained into a cargo ship. Filling the cargo ship with (mostly) water would waste both valuable time and resources.

The goal of the present invention is therefore to provide a skimmer and associated methods that can effectively remove a substance from a liquid surface under variable circumstances.

This object can be achieved by providing a skimmer in accordance with claim 1.

Having a skimmer comprising a mixture inspection element enables an operator of the skimmer to inspect a composition of the mixture that is drained. By inspecting the mixture the operator can determine whether the skimmer is draining the substance effectively and act accordingly. For example, an operator cleaning up an oil spill at a remote location by pumping the mixture into a tanker using the skimmer may at some point detect via the mixture inspection element that the mixture contains mostly water. He can then redirect the output of the drainage conduit such that the mixture is no longer pumped into the tanker, preventing filling the tanker with mostly water. This has as advantage that the substance can be removed more efficiently and thus more cost effectively.

The skimmer according to the invention can also be used to collect other substances from a liquid surface, for example collecting duckweed from a pond.

It is noted that the pump preferably comprises a hydraulic pump, but that alternatively the pump may comprise an electric pump or any other type of pump. This is done for both improving the water quality and for aesthetic reasons.

In an embodiment of the invention the mixture inspection element is operatively connected to the at least one drainage connection. This has as advantage that the mixture inspection element is relatively close to the buffer vessel and therefor provides a relatively quick indication of changes in the composition of the mixture in the buffer vessel.

In another embodiment according to the invention the skimmer further comprises the drainage conduit and the mixture inspection element is connected to the drainage conduit. This has as advantage that the mixture inspection element is relatively close to the operator, making it easier for the operator to observe the mixture inspection element.

It is noted that the skimmer may comprise a plurality of drainage connectors and a corresponding plurality of drainage conduits. It is further noted that the term drainage conduit in this application might comprise one drainage conduit, or a plurality of drainage conduits.

It is further noted that each end of the drainage conduit might comprise one or more drainage conduit openings. For example, a drainage conduit may comprise one or more inlet openings at a first end and one or more outlet openings at a second end and wherein during use the mixture flows from the first end to the second end.

Additionally, it is noted that the liquid surface may refer to a top layer of a first liquid, on top of which the substance, such as a second liquid or solid particles may be present. For example, when the first liquid is a higher fraction liquid as the second liquid and the second liquid is a lower fraction liquid as a first liquid, the second liquid will float on top of the first liquid. Similarly, when the first liquid has enough surface tension, solid particles, such as duckweed, may float on top of the first liquid. Additionally, an interface between the first liquid and the second liquid may comprise a mix of both liquids.

According to the invention, the mixture inspection element comprises a sensor pipe connected to the drainage conduit and/or the at least one drainage connection, wherein the sensor pipe is configured to drain a sample portion of the mixture from the drainage conduit and/or the at least one drainage connection to an open end of the sensor pipe.

Having the mixture inspection element comprising a sensor pipe has as effect that the mixture will be forced out of the sensor pipe during operation by the pressure delivered by the pump. This enables an effective inspection with a relatively simple construction.

Another advantage of having the mixture inspection element comprising a sensor pipe is that the mixture can be inspected at some distance from the skimmer. This is in particular importance if the distance between the skimmer and the operator is relatively large, for example in the case that the skimmer is being used at open sea, while the operator is on a larger vessel.

In a further embodiment according to the invention the drainage conduit and/or the at least one drainage connection and/or sensor pipe comprises a flow controller configured for controlling an amount of the mixture that passes through the drainage conduit and/or the at least one drainage connection and/or sensor pipe during use.

The advantage of having the drainage conduit and/or the at least one drainage connection comprising a flow controller is that the quantity of liquid that is pumped to the drainage conduit can be adapted to a particular situation. For example, when a container receiving the mixture from the drainage conduit is almost or entirely full, the flow controller may be used by an operator to, directly or indirectly, temporarily lower the flow speed, or shut down the flow entirely. This is of special importance in case of a plurality of drainage conduits being used, wherein one drainage conduit should have a different flow speed.

The advantage of having the sensor pipe comprising a flow controller is that the flow in the sensor pipe can be adapted according to the substance and/or the mixture (composition) that is being pumped. For example, when the substance is a second liquid, the mixture might easily pass through the sensor pipe and the flow may be restricted by the operator to prevent an abundance of the mixture being drained out of the sensor pipe. In other situations, for example when the substance comprises solid particles as duckweed, a relatively lower flow speed might clog up the sensor pipe. In this case the operator might control the flow in the sensor pipe to be higher using the flow controller.

In a further embodiment according to the invention, the sensor pipe extends partly within the drainage conduit and/or the at least one drainage connection. In one example, the sensor pipe extends in a first direction which is about perpendicular to the flow direction in the drainage conduit and/or drainage connection.

Alternatively, the sensor pipe extends in both the first direction and in the flow direction, wherein the first direction is at an angle to the flow direction, wherein the angle ranges from 10 degrees to 90 degrees.

Alternatively, the sensor pipe extends in both the first direction and in a second direction opposite to the flow direction, wherein the first direction is at an angle to the flow direction, wherein the angle ranges from 90 degrees to 170 degrees.

In an example, the sensor pipe extends from an inner wall of the drainage connection towards a center of the drainage connection when viewed from the flow direction.

This perpendicular extension of the sensor pipe has as advantage that a more representative sample is taken from the mixture. This is especially relevant in cases wherein the first liquid has a higher adhesion with the material of the drainage conduit and/or the at least one drainage connection as composed to the adhesion of the substance, which causes the first liquid to 'stick' to the inner wall of the drainage conduit and/or the at least one drainage connection creating a film of the first liquid. This may cause a relatively large quantity of the first liquid entering the sensor pipe, making the sample not representative of the mixture. This is in some embodiments prevented by having the sensor pipe extending partly within the drainage conduct and/or the at least one drainage connection.

In an embodiment according to the invention, the sensor pipe is configured to drain the hydraulic pump and/or buffer vessel after use thereof. This has the advantage that the pump is automatically drained when the skimmer is lifted from the liquid surface after use thereof, preventing residue mixture being left over in the pump after use of the skimmer. This is especially advantageous, when the substance is very hard to remove, such as a crude oil.

In a further embodiment, the sensor pipe is configured to let an operator of the skimmer control the draining of the pump. This has as advantage that the mixture drained from the pump and/or buffer vessel can be collected and disposed thereof in an appropriate manner. In an example, the sensor pipe comprises a drain valve positioned at the lowest position of the sensor pipe when the skimmer is in an upright position.

In some embodiments according to the invention, the mixture inspection element comprises a transparent section of the drainage conduit. This has the advantage that an operator can inspect the mixture flowing through the drainage conduit during use by looking at the mixture composition flowing through the drainage conduit without the mixture being spilled back in the area that is being cleaned.

In an example, the transparent inspection element is positioned close to a position of the operator during use.

In an embodiment according to the invention, the floatation element comprises a float and a height adjuster configured for adjusting a relative distance between the float and the buffer vessel.

Having the height adjusted for adjusting the relative distance between the float and the buffer vessel enables the operator of the skimmer to adjust the position of the outer edge of the buffer vessel (and the position of the inlet opening) relative to the liquid surface which consequently controls a draft of the skimmer. When the relative distance is increased, the skimmer will have more draft and the outer edge of the buffer vessel will lay relatively deeper in the liquid. When the relative distance is decreased, the skimmer will have less draft and the outer edge will lay relatively closer to the liquid surface as compared to when the relative distance is increased. This has as advantage that the operator may change the relative distance according to the substance to be removed and prevent taking in a relatively large amount of the first liquid. For example, if the substance forms a relatively thin layer, the outer edge of the buffer vessel may be positioned close to the liquid surface just under the thin layer of substance. However, if the substance forms a relatively thick layer, the operator may increase the relative distance such that the outer edge is still just under the layer of substance.

It is noted that the adjustments to the relative distance between the float and the buffer vessel may be made by the operator based on his observations of the mixture using the mixture inspection element. For example, if the operator concludes from the mixture inspection element that the mixture mostly contains the first liquid, the operator may control the height adjuster to decrease the relative distance between the float and the buffer vessel. However, if the operator concludes from the mixture inspection element that there is a relatively low amount of mixture being drained, the operator may control the pump to increase a pump speed and the height adjuster to increase the relative distance between the float and the buffer vessel, such that a size of the inlet opening is increased and the mixture will flow into the buffer vessel more easily, thus increasing the speed with which the mixture being drained.

In a further embodiment according to the invention, the height adjuster comprises a hydraulic and/or mechanical system.

The advantage of the height adjuster comprising a hydraulic system is that the height adjuster may be controlled by the operator from some distance manually and/or automatically, optionally when in operation. This is especially relevant when, for example, the skimmer is deployed at open sea and controlled by the operator from a supporting vessel, since in these cases the operator does not have easy access to the skimmer.

In a different further embodiment, the height adjuster comprises a rod connected to the float and the buffer vessel and wherein at least one of the connections between the float and the rod and the buffer vessel and the rod comprises a threaded connection. This enables the operator to change the height of the float by rotating the rod and/or float, also when in operation.

This has as advantage that the height adjuster does not comprises complex parts and is therefore cheaper and easier to produce and more maintenance friendly.

In an embodiment according to the invention the skimmer further comprises a liquid injection system for injecting liquid in the drainage conduit and configured for increasing a flow velocity in the drainage conduit.

It is noted that the liquid being injected may comprise the first liquid, for example (ocean) water.

By having the liquid injection system as described above, the velocity of the mixture in the drainage conduct, and thus the speed with which the mixture is drained, will be increased. This has as advantage that the substance is removed from the first liquid more quickly.

In a further embodiment, the liquid injection system is positioned between the mixture inspection element and an outer edge of the drainage conduit and preferably near the mixture inspection element.

This has as advantage that the inspection of the mixture is not disturbed by the liquid injection system.

In an embodiment according to the invention the skimmer further comprises at least one liquid inlet connected to the buffer vessel and which is positioned under the liquid surface during use, and wherein each of the at least one liquid inlet comprises a valve mechanism for closing the inlet during pumping

Having an inlet connected to the buffer vessel which is positioned under the liquid surface, has as advantage that it enables an operator to let the buffer vessel at least partly fill up with liquid, such that the buffer vessel will at least partly sink below the liquid surface.

It is further noted that the liquid inlet may be used to drain the buffer vessel, the (hydraulic) pump, the at least one drainage connection and/or drainage conduit of remaining liquid(s) and/or substance after use of the skimmer.

In a further embodiment according to the invention, each of the at least one liquid inlet comprises a valve mechanism for closing the inlet during pumping. This has as advantage that no additional first liquid is being pumped via the at least one liquid inlet during normal use of the skimmer after deployment.

In an even further embodiment according to the invention the valve mechanism is connected to a hydraulics system of the at least one pump using a hydraulic manifold and wherein the valve mechanism is configured to close in correspondence with a use of the hydraulic pump.

This has as advantage that the valve mechanism will automatically closed when the at least one pump is being used. This makes the skimmer more easy to use and does not allow the operator to accidently forget to close the valve mechanism during pumping.

In an alternative or additional further embodiment according to the invention the at least one liquid inlet comprises a one-way valve configured to be closed by pressure in one or more of the at least one pump and/or drainage conduit. This has the advantage that the at least one liquid inlet will be closed automatically during use of the at least one pump.

In an embodiment according to the invention the buffer vessel is at least partly surrounded by an outer vessel.

The advantage of having a cage and/or an outer vessel is that the buffer vessel and pump are protected from damages from for example collisions. This prevents leaks and other damages which would cause the skimmer to work sub-optimal.

In a further embodiment according to the invention, the outer vessel comprises one or more openings and a partly open space exists between the outer vessel and the buffer vessel configured to be filled with liquid when the skimmer is deployed. This has as advantage that the outer vessel will act as a wave damper, keeping the skimmer steadier and less influenced by waves. This is especially relevant when the skimmer is deployed at open sea.

In an embodiment according to the invention, the inlet opening defined an inlet channel, wherein the inlet opening comprises a restriction. Having a restriction in the inlet opening has the effect that the mixture flowing into the inlet channel will come in contact with all sides of the inlet channel, resulting in an adhesive effect of the mixture with the inlet channel, having a similar effect as a capillary action, resulting in the mixture to flow into the buffer vessel more quickly due to the adhesive properties between the mixture and the inlet channel.

In a preferred embodiment according to the invention, the inlet channel is defined by the buffer vessel and the floating element.

The present invention further relates to a method for removing a substance from a liquid surface, the method comprising the steps of:
- providing a skimmer according to an embodiment of the invention;
- positioning the skimmer in the liquid;
- optionally controlling a draft of the skimmer by raising or lowering the floatation element using the height adjuster;
- letting the mixture flow in the buffer vessel;
- pumping the mixture from the buffer vessel;
- observing a mixture consistency through the mixture inspection element; and,
- directing an output of the drainage conduit corresponding to the observation of the mixture consistency and/or adjusting the skimmer using the height adjuster;
- optionally adapting the draft of the skimmer by raising or lowering the floatation element according to the observation of the mixture consistency.

The method provides the same or similar effects and/or advantages as described in relation to the skimmer according to embodiments of the invention.

The invention is described in the foregoing as example. It is understood that those skilled in the art are capable of realizing different variants of the invention without actually departing from the scope of the invention. Further advantages, features and details of the invention are elucidated on the basis of preferred embodiments thereof, wherein reference is made to the accompanying drawings, in which:
- Figure 1 shows a perspective view of an embodiment of a skimmer according to the invention;
- Figure 2 shows a perspective cross-cut view of the skimmer of figure 1 providing an overview of internal components of the skimmer;
- Figure 3 shows a cross-cut side view of the skimmer of figure 1;
- Figure 4 shows a cross-cut side view of the skimmer of figure 1, wherein the float is extended;
- Figure 5 shows a perspective cross-cute view of a second embodiment of a skimmer according to the invention;
- Figure 6 shows a cross-cut side view of the skimmer of figure 5.

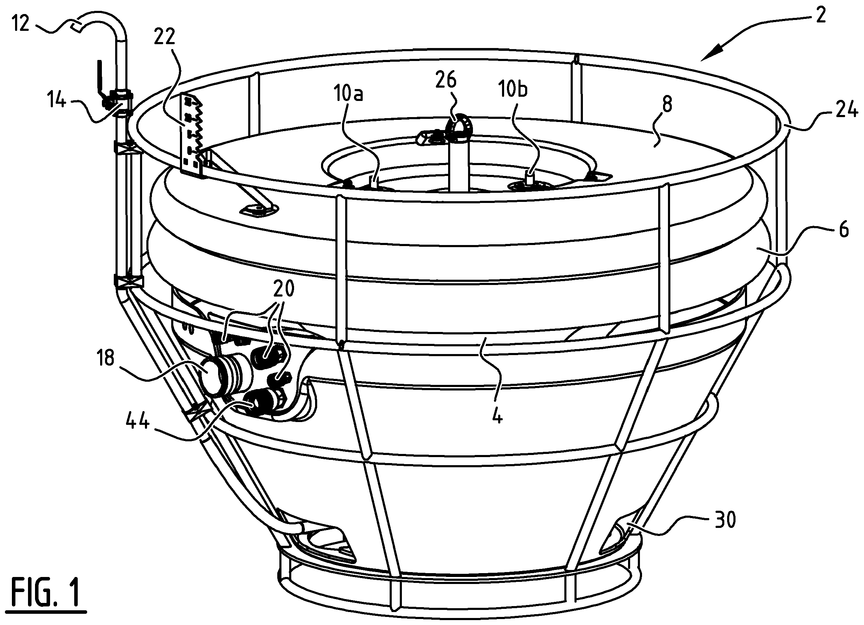

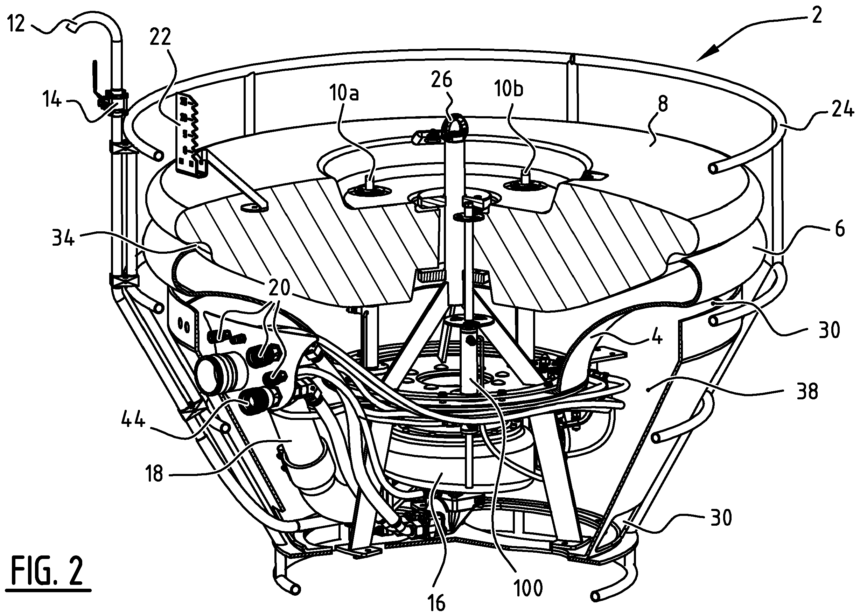

Figure 1-4 shows skimmer 2 according to an example of the invention for collecting a substance from a liquid surface. Skimmer 2 comprises a buffer vessel 4 that is provided with open top side 40, drain 42 and outer edge 6. Float 8 is connected with buffer vessel 4 via the height adjuster 10, which comprises hydraulic cylinders 10a, 10b, 10c. It is noted that the number of cylinders is just provided as an example and that the height adjuster 10 may comprise one or more hydraulic cylinders. Float 6 is configured make skimmer 2 buoyant, for example by being at least partly made from a light material such as Styrofoam or expanded polystyrene (EPS), and/or by having one or more air chambers. It will be understood that other materials could also be envisaged in accordance to the invention. Outer edge 6 and float 8 defines inlet opening 34, through which the mixture can enter skimmer 2 via open top side 40 to fill buffer vessel 4.

Buffer vessel 4 is partly surrounded by outer vessel 28 which has the function of water anchor and which is provided with outer vessel openings 30. During operation liquid, such as seawater, can enter in dampening space 38 via the outer vessel openings 30. The liquid in the dampening space 38 has the effect that waves are dampened, making skimmer 2 more stable during operation and less subjectable to waves. Outer vessel 28 and float 8 are surrounded by cage 24 to provide protection against impact of, for example, foreign objects which otherwise may damage skimmer 2.

Skimmer 2 is further provided with hydraulic pump 16 connected with drain 42 of buffer vessel 4 configured for pumping the mixture from buffer vessel 4 through the drainage conduit connected to drainage connection 18 to transport the mixture to a desired location (not shown). In the illustrated example hydraulic pump is configured to be connected to a pump controller (not shown) using the hydraulic connections 20. This enables an operator to operate hydraulic pump 16 from a distance. It is noted that hydraulic pump 16 is merely shown as example and that other types of pumps may be used according to the invention.

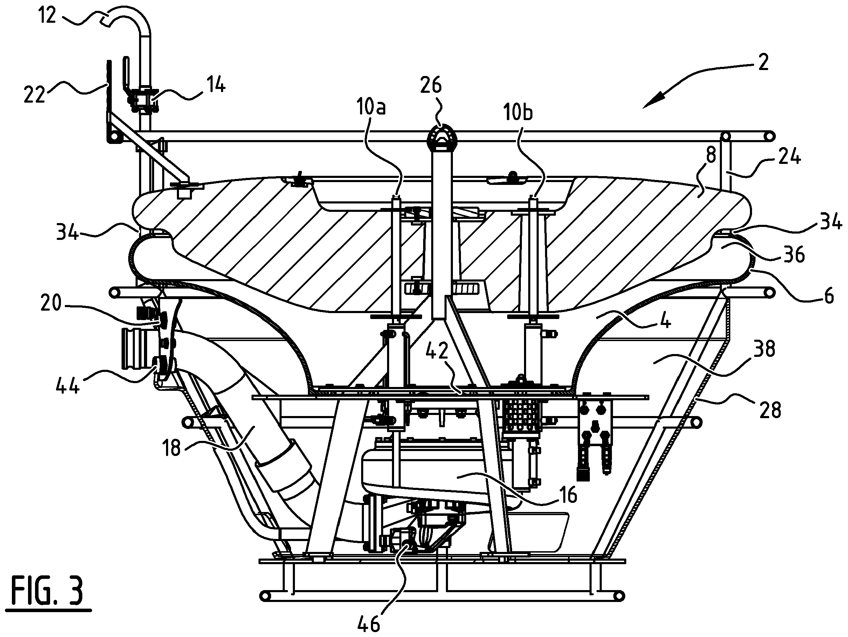

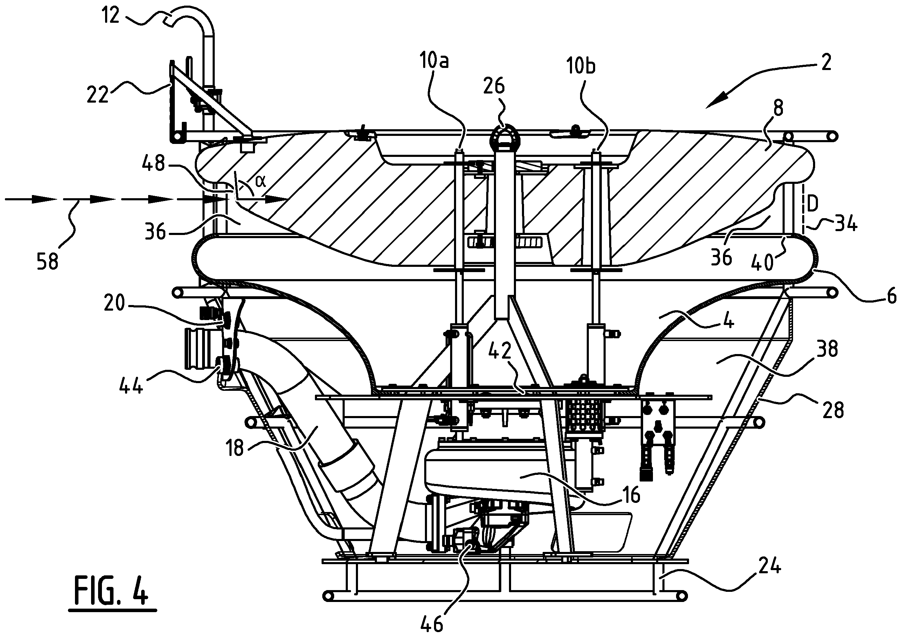

Hydraulic connections 20 are further connected to hydraulic cylinders 10a, 10b, 10c of height adjuster 10 to enable the operator to adjust the distance between float 8 and buffer vessel 4, also adjusting the size of inlet opening 34. This is apparent in figure 3, wherein hydraulic cylinders 10a, 10b, 10c are compressed and the distance between float 8 and buffer vessel 4 and corresponding inlet opening is relatively small, while in figure 4 the hydraulic cylinders 10a, 10b, 10c are extended and thus the distance between float 8 and buffer vessel 4 and corresponding inlet opening is relatively large.

Controlling the height of float 8 may be used to adapt the size of inlet opening 34 to the substance to be cleaned. For example, a layer of crude oil might be relatively thick and thus a relative large inlet opening 34 is needed to accept the mixture. On the other hand, a layer of duck weed in a pond might be relatively thin and thus a relative small inlet opening 34 is needed. It is clear that the examples provide above do not limit the invention and that the height of float 8 may be adapted differently according to a judgment of the operator. For example, when removing crude oil the operator might decide to adjust the height of float 8 such that inlet opening is smaller as a thickness of the crude oil layer, thus preventing an abundance of seawater to enter skimmer 2, while when removing duckweed the operator might decide to increase the height of float 8 in order to increase the speed with which the duckweed is removed.

Furthermore, the operator can control how deep skimmer 2 is in the liquid during user thereof. First, when the skimmer is hoisted in the liquid using lift eye 26 buffer vessel is filled with the liquid and/or substance via primer opening 46to sink skimmer 2 to the desired depth wherein outer edge 6 is under the liquid surface. Depth reader 22 may be used by the operator to receive an indication of the desired depth (i.e. draft) of the skimmer and/or to receive an indication of the size of the inlet opening. Optionally, primer opening 46 is closed by the operator using the corresponding flow controller (not shown) or primer opening 46 is configured to close in reaction of hydraulic pump 16 being switched on and to re-open in reaction of hydraulic pump 16 being switched off. Alternatively, when primer opening 46 is small enough it may remain open during operation. When buffer vessel 4 is filled up with the mixture outer edge 6 is under the water surface. It is hereby noted that the amount of the mixture in buffer vessel 4 partly determines the depth of skimmer 2 in the liquid. When there is a relatively large amount of the mixture in buffer vessel 4, skimmer 2 will be relatively deep in the liquid. When a relatively small amount of the mixture is in buffer vessel 4, skimmer 2 will be less deep in the liquid. By controlling the speed of hydraulic pump 16 the operator can control the amount of the mixture present in buffer vessel 4 and thus control the depth of skimmer 2. When the pumping speed is slower than or matches the speed with which the mixture flows into buffer vessel 4 a current depth of skimmer 2 is maintained. When the pump speed of hydraulic pump 16 is faster as the speed with which the mixture flows into buffer vessel 4, the amount of mixture in buffer vessel 4 will decrease and thus skimmer 2 will rise relative to the liquid surface. When the pump speed of hydraulic pump 16 is slower as the speed with which the mixture flows into buffer vessel 4, the amount of mixture in buffer vessel 4 will increase and thus skimmer 2 will sink relative to the liquid surface. It is noted that the optimal depth of skimmer 2 depends on the use case and the substance that is being skimmed and should therefor be controlled by the operator.

It is noted that a composition of the mixture further affects the depth of skimmer 2, when the mixture contains a relatively large amount of lighter substances compared to substances in which skimmer 2 floats, skimmer 2 will be less deep compared to when the mixture contains a relatively large amount of heavier substances compared to substances in which skimmer 2 floats.

During operation the operator can use mixture inspection element 12 to gather insight on the mixture being pumped. When the mixture is pumped from buffer vessel 2, a small part of the mixture will exit from one end of mixture inspection element 12. By inspecting the mixture coming from the one end of mixture inspection element 12 the operator can take appropriate actions based on his observations.

For example, when a large percentage of the mixture consist of the liquid and not the substance, the operator can asses that inlet opening 34 is too large and control height adjuster 10 to narrow inlet opening 34. Alternatively or additionally, the operator may asses that skimmer 2 lays too deep and may temporarily increase the speed of hydraulic pump 16 to raise skimmer 2 relative to the liquid surface.

In another example, when a large percentage of the mixture consist of the substance the operator might channel the second end of the drainage conduit (not shown) to an appropriate container.

It is noted that, due to the diameter of mixture inspection element 12, in case of a high cohesive substance such as crude oil, might not flow through mixture inspection element 12 when the mixture contains a relatively large amount of the substance. Thus, no mixture exiting mixture inspection element 12 might indicate to the operator that the mixture contains a relatively high amount of the substance. Alternatively, no mixture exiting mixture inspection element 12 may indicate that outer edge 6 is above the surface level of the liquid and that the depth of skimmer 2 should be adjusted by opening primer opening 46 and decreasing the speed of hydraulic pump 16.

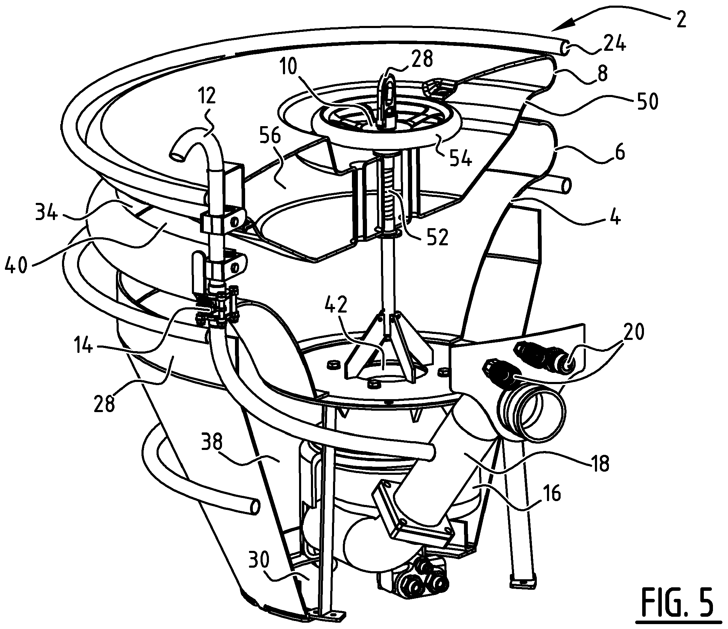

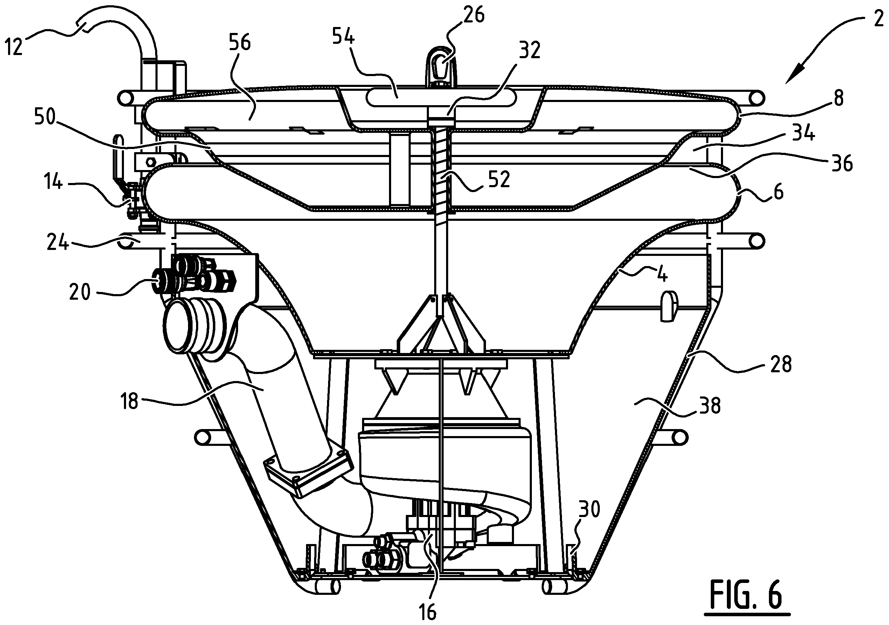

Figures 5 and 6 show another example of a skimmer according to the invention, buffer vessel 4, with outer edge 6 that surrounds open top side 40. Buffer vessel 4 further has drain 42 that is connected with hydraulic pump 16 to pump the mixture from buffer vessel 4 through drainage connection 20. Hydraulic pump 16 is powered and controlled via hydraulics (not shown) that are connected via hydraulic connections 20. Skimmer 2 is further provided with sensor pipe 12 connected to drainage connection 18. Skimmer 2 is further provided with outer vessel 28 with inlet openings 30. Outer vessel 29 and buffer vessel 3 together define damping space 38. In addition, skimmer 2 is surrounded by cage 24 for additional protection against collisions with foreign objects. Lift eye 26 can be used to lift skimmer 2 in and out of the water.

Float 8 and outer edge 6 define inlet opening 34 having a distance D and inlet channel 36, through which the mixture can enter buffer vessel 4. The size of the inlet opening may be changed using threaded height adjuster 32 which consists of rod 52 that is connected with float 8 and buffer vessel 4. By rotation rod 52 using adjustment wheel 54, distance D can be varied. Float 8 is provided with air chamber 56 to provide buoyancy to skimmer 2.

Comparing skimmer 2 of figures 1 - 4 and skimmer 2 of figures 5-6, float 8 shows steep edge 48 in skimmer 2 in figures 1-4, while float 8 shows gradual edge 50 in figures 5-6. Compared to gradual edge 50 the steep edge 48 causes a restriction in inlet opening 34 and corresponding inlet channel 36. This has as effect that the mixture flowing into inlet channel 36 will come in contact with steep edge 48, resulting in an adhesive effect of the mixture with steep edge 48, having a similar effect as a capillary action, resulting in the mixture to flow into buffer vessel 4 more quickly due to the adhesive properties between the mixture and steep edge 48. With gradual edge 50 the mixture will less often hit gradual edge 50 when entering inlet channel 36 with average flow direction 58. Preferably, angle α between average flow direction 58 and steep edge 48 is at least 70 degrees.

It will be clear that skimmer 2 of figures 5-6 can also be equipped with a float with steep edge 48, while skimmer 2 of figures 1-4 can also be equipped with a float with gradual edge 50. Operation of the two skimmers in figure 1-4 and figure 5-6 are substantially similar and as described above.

The present invention is by no means limited to the above described preferred embodiments thereof. It will be clear that different embodiments or components thereof may be combined in the present invention. The rights sought are defined by the following claims within the scope of which many modifications can be envisaged.

## Claims

1. Skimmer (2) for collecting a substance, such as crude oil, from a liquid surface, the skimmer (2) comprising:
- a buffer vessel (4) provided with an open top end and (40) configured for at least temporarily holding a mixture of the substance to be removed and the liquid;
- a floatation element that is arranged on or at the buffer vessel (4) to float on the liquid surface; and,
- at least one pump (16) provided with at least one drainage connection (18) configured to be connected with a drainage conduit;
wherein the buffer vessel (4) comprises an outer edge (6) that defines an inlet opening (34) for accepting the mixture, and,
wherein the at least one pump (16) is configured for pumping the mixture from the buffer vessel (4) through the drainage conduit to a drainage designation, and
wherein the skimmer (2) further comprises a mixture inspection element (12),
**characterized in that**,
the mixture inspection element (12) comprises a sensor pipe connected to the drainage conduit and/or the at least one drainage connection (18), wherein the sensor pipe is configured to drain a sample portion of the mixture from the drainage conduit and/or the at least one drainage connection (18) to an open end of the sensor pipe.

2. Skimmer (2) according to claim 1, wherein the mixture inspection element (12) is operatively connected to the at least one drainage connection (18).

3. Skimmer (2) according to claim 1 or 2, wherein the skimmer (2) further comprises the drainage conduit and the mixture inspection element is connected to the drainage conduit.

4. Skimmer (2) according to any of the previous claims, wherein the drainage conduit and/or the at least one drainage connection (18) and/or sensor pipe comprises a flow controller configured for controlling an amount of the mixture that passes through the drainage conduit and/or the at least one drainage connection (18), and/or sensor pipe during use.

5. Skimmer (2) according to any one of the -previous claims, wherein the sensor pipe extends partly within the drainage conduit and/or the at least one drainage connection (18).

6. Skimmer (2) according to any one of the -previous claims, wherein the sensor pipe is configured to drain the pump (16) and/or buffer vessel (4) after use thereof.

7. Skimmer (2) according to any one of the previous claims, wherein the mixture inspection element (12) comprises a transparent section of the drainage conduit.

8. Skimmer (2) according to any one of the previous claims, wherein the floatation element comprises a float (8) and a height adjuster (10) configured for adjusting a relative distance between the float (8) and the buffer vessel (4).

9. Skimmer (2) according to the foregoing claims, wherein the height adjuster (10) comprises a hydraulic system (10a, 10b, 10c) and/or
wherein the height adjuster (10) comprises a rod (52) connected to the float (8) and the buffer vessel (4), and wherein at least one of the connections between the float (8) and the rod and the buffer vessel (4) and the rod comprises a threaded connection (32)

10. Skimmer (2) according to any one of the previous claims, wherein the skimmer (2) further comprises a liquid injection system configured for injecting liquid in the drainage conduit and increasing a flow velocity in the drainage conduit, wherein the water injection system is preferably positioned between the mixture inspection element (12) and an outer end of the drainage conduit.

11. Skimmer (2) according to any one of the previous claims, wherein the skimmer (2) further comprises at least one liquid inlet connected to the buffer vessel (4) and which is positioned under the liquid surface during use, and wherein each of the at least one liquid inlet comprises a valve mechanism for closing the inlet during pumping, wherein the one or more pump (16) preferably comprises a hydraulic pump and wherein the valve mechanism is connected to a hydraulics system of the at least one pump using a hydraulic manifold and wherein the valve mechanism is configured to close in correspondence with a use of the at least one pump (16), and/or wherein the at least one liquid inlet preferably comprises a one-way valve configured to be closed by pressure in one or more of the at least one pump (16), the at least one drainage connection (18), and/or the drainage conduit.

12. Skimmer (2) according to any one of the previous claims, wherein the buffer vessel (4) is at least partly surrounded by a cage and/or an outer vessel, and wherein preferably the outer vessel (28) comprises one or more openings, and wherein preferably a partly open space exists between the outer vessel (28) and the buffer vessel (4) configured to be filled with a liquid when the skimmer (2) is deployed.

13. Skimmer (2) according to any of the previous claims, wherein the inlet opening (34) defines an inlet channel (36), and wherein the inlet channel (36) comprises a restriction over some distance, wherein the inlet channel (36) is preferably defined by the buffer vessel (4) and the floating element, and wherein the floating element more preferably comprises an edge (18) having an edge surface that is at an angle of at least 70° to an average inflow direction (58) of the mixture flowing in the buffer vessel (4).

14. Method for removing a substance from a liquid surface, the method comprising the steps of
- providing a skimmer (2) according to any one of the previous claims;
- positioning the skimmer (2) in the liquid;
- letting the mixture flow in the buffer vessel (4);
- pumping the mixture from the buffer vessel (4);
- observing a mixture consistency through the mixture inspection element (12).

15. Method according to claim 14, further comprising one or more of the steps of:
- directing an output of the drainage conduit corresponding to the observation of the mixture consistency;
- adapting a distance between the buffer vessel (4) and floating element using the height controller;
- adapting an amount of mixture in the buffer vessel (4) by changing a pumping speed of the pump (16).

## Patentansprüche

1. Skimmer (2) zum Aufnehmen einer Substanz, wie Rohöl, von einer Flüssigkeitsoberfläche, der Skimmer (2) umfassend:
- ein Puffergefäß (4), das mit einem offenen oberen Ende versehen und (40) zum mindestens vorübergehenden Fassen eines Gemischs aus der zu entfernenden Substanz und der Flüssigkeit konfiguriert ist;
- ein Schwimmelement, das auf oder an dem Pufferbehälter (4) angeordnet ist, um auf der Flüssigkeitsoberfläche zu schwimmen; und,
- mindestens eine Pumpe (16), die mit mindestens einer Abflussverbindung (18) versehen ist, die zum Verbinden mit einer Abflussleitung konfiguriert ist;
wobei das Puffergefäß (4) einen äußeren Rand (6) umfasst, der eine Einlassöffnung (34) zum Entgegennehmen des Gemischs definiert, und
wobei die mindestens eine Pumpe (16) zum Pumpen des Gemischs aus dem Pufferbehälter (4) durch die Abflussleitung hindurch zu einem Abflussziel konfiguriert ist, und
wobei der Skimmer (2) ferner ein Gemischprüfelement (12) umfasst,
**dadurch gekennzeichnet, dass**
das Gemischprüfelement (12) ein Sensorrohr umfasst, das mit der Abflussleitung und/oder der mindestens einen Abflussverbindung (18) verbunden ist, wobei das Sensorrohr konfiguriert ist, um einen Probenteil des Gemischs aus der Abflussleitung und/oder der mindestens einen Abflussverbindung (18) zu einem offenen Ende des Sensorrohrs abfließen zu lassen.

2. Skimmer (2) nach Anspruch 1, wobei das Gemischprüfelement (12) mit der mindestens einen Abflussverbindung (18) wirkverbunden ist.

3. Skimmer (2) nach Anspruch 1 oder 2, wobei der Skimmer (2) ferner die Abflussleitung umfasst und das Gemischprüfelement mit der Abflussleitung verbunden ist.

4. Skimmer (2) nach einem der vorstehenden Ansprüche, wobei die Abflussleitung und/oder die mindestens eine Abflussverbindung (18) und/oder das Sensorrohr einen Durchflussregler umfasst, der zum Regeln einer Menge des Gemischs konfiguriert ist, das während einer Verwendung durch die Abflussleitung und/oder die mindestens eine Abflussverbindung (18) und/oder das Sensorrohr hindurch läuft.

5. Skimmer (2) nach einem der vorstehenden Ansprüche, wobei sich das Sensorrohr teilweise innerhalb der Abflussleitung und/oder der mindestens einen Abflussverbindung (18) erstreckt.

6. Skimmer (2) nach einem der vorstehenden Ansprüche, wobei das Sensorrohr konfiguriert ist, um die Pumpe (16) und/oder den Pufferbehälter (4) nach der Verwendung davon zu entleeren.

7. Skimmer (2) nach einem der vorstehenden Ansprüche, wobei das Gemischprüfelement (12) einen transparenten Abschnitt der Abflussleitung umfasst.

8. Skimmer (2) nach einem der vorstehenden Ansprüche, wobei das Schwimmelement einen Schwimmer (8) und einen Höheneinsteller (10) umfasst, der zum Einstellen einer relativen Distanz zwischen dem Schwimmer (8) und dem Pufferbehälter (4) konfiguriert ist.

9. Skimmer (2) nach den vorstehenden Ansprüchen, wobei der Höheneinsteller (10) ein Hydrauliksystem (10a, 10b, 10c) umfasst und/oder
wobei der Höheneinsteller (10) eine Stange (52) umfasst, die mit dem Schwimmer (8) und dem Pufferbehälter (4) verbunden ist, und wobei mindestens eine der Verbindungen zwischen dem Schwimmer (8) und der Stange und dem Pufferbehälter (4) und der Stange eine Gewindeverbindung (32) umfasst.

10. Skimmer (2) nach einem der vorstehenden Ansprüche, wobei der Skimmer (2) ferner ein Flüssigkeitseinspritzsystem umfasst, das zum Einspritzen von Flüssigkeit in die Abflussleitung und Erhöhen einer Durchflussgeschwindigkeit in der Abflussleitung konfiguriert ist, wobei das Wassereinspritzsystem vorzugsweise zwischen dem Gemischprüfelement (12) und einem äußeren Ende der Abflussleitung positioniert ist.

11. Skimmer (2) nach einem der vorstehenden Ansprüche, wobei der Skimmer (2) ferner mindestens einen Flüssigkeitseinlass umfasst, der mit dem Pufferbehälter (4) verbunden ist und der während der Verwendung unter der Flüssigkeitsoberfläche positioniert ist, und wobei jeder des mindestens einen Flüssigkeitseinlasses einen Ventilmechanismus zum Schließen des Einlasses während des Pumpens umfasst, wobei die eine oder die mehreren Pumpen (16) vorzugsweise eine Hydraulikpumpe umfassen und wobei der Ventilmechanismus unter Verwendung eines Hydraulikverteilers mit einem Hydrauliksystem der mindestens einen Pumpe verbunden ist und wobei der Ventilmechanismus konfiguriert ist, um sich entsprechend einer Verwendung der mindestens einen Pumpe (16) zu schließen, und/oder wobei der mindestens eine Flüssigkeitseinlass vorzugsweise ein Einwegventil umfasst, das konfiguriert ist, um durch Druck in einer oder mehreren der mindestens einen Pumpe (16), der mindestens einen Abflussverbindung (18) und/oder der Abflussleitung geschlossen zu werden.

12. Skimmer (2) nach einem der vorstehenden Ansprüche, wobei der Pufferbehälter (4) mindestens teilweise von einem Käfig und/oder einem äußeren Behälter umgeben ist, und wobei der äußere Behälter (28) vorzugsweise eine oder mehrere Öffnungen umfasst, und wobei zwischen dem äußeren Behälter (28) und dem Pufferbehälter (4) vorzugsweise ein teilweise offener Raum besteht, der konfiguriert ist, um mit einer Flüssigkeit gefüllt zu werden, wenn der Skimmer (2) eingesetzt wird.

13. Skimmer (2) nach einem der vorstehenden Ansprüche, wobei die Einlassöffnung (34) einen Einlasskanal (36) definiert, und wobei der Einlasskanal (36) eine Verengung über eine gewisse Distanz umfasst, wobei der Einlasskanal (36) vorzugsweise durch das Puffergefäß (4) und das Schwimmelement definiert ist, und wobei das Schwimmelement mehr bevorzugt einen Rand (18) umfasst, der eine Randoberfläche aufweist, der sich in einem Winkel von mindestens 70° zu einer durchschnittlichen Einflussrichtung (58) des Gemischs, das in dem Puffergefäß (4) fließt, befindet.

14. Verfahren zum Entfernen einer Substanz von einer Flüssigkeitsoberfläche, das Verfahren umfassend die Schritte:
- Bereitstellen eines Skimmers (2) nach einem der vorstehenden Ansprüche;
- Positionieren des Skimmers (2) in der Flüssigkeit;
- Fließenlassen des Gemischs in dem Pufferbehälter (4);
- Pumpen des Gemischs aus dem Pufferbehälter (4);
- Beobachten einer Gemischkonsistenz durch das Gemischprüfelement (12) hindurch.

15. Verfahren nach Anspruch 14, ferner umfassend einen oder mehrere der Schritte:
- Lenken einer Ausgabe der Abflussleitung entsprechend der Beobachtung der Gemischkonsistenz;
- Anpassen einer Distanz zwischen dem Pufferbehälter (4) und dem Schwimmelement unter Verwendung des Höhenreglers;
- Anpassen einer Menge des Gemischs in dem Pufferbehälter (4) durch Ändern eines Pumptempos der Pumpe (16).

## Revendications

1. Écumoire (2) destinée à collecter une substance, telle que du pétrole brut, à partir d'une surface liquide, l'écumoire (2) comprenant :
- un récipient tampon (4) pourvu d'une extrémité supérieure ouverte (40) et conçu pour contenir au moins temporairement un mélange de la substance à éliminer et du liquide ;
- un élément de flottaison qui est agencé sur ou au niveau du récipient tampon (4) pour flotter sur la surface du liquide ; et,
- au moins une pompe (16) pourvue d'au moins un raccordement de drainage (18) conçu pour être raccordé à un conduit de drainage ;
dans laquelle le récipient tampon (4) comprend un bord externe (6) qui définit une ouverture d'entrée (34) pour accepter le mélange, et,
dans laquelle l'au moins une pompe (16) est conçue pour pomper le mélange à partir du récipient tampon (4) à travers le conduit de drainage jusqu'à une désignation de drainage, et
dans laquelle l'écumoire (2) comprend en outre un élément d'inspection de mélange (12),
**caractérisée en ce que,**
l'élément d'inspection de mélange (12) comprend un tuyau capteur raccordé au conduit de drainage et/ou à l'au moins un raccordement de drainage (18), dans laquelle le tuyau capteur est conçu pour drainer une partie d'échantillon du mélange à partir du conduit de drainage et/ou de l'au moins un raccordement de drainage (18) jusqu'à une extrémité ouverte du tuyau capteur.

2. Écumoire (2) selon la revendication 1, dans laquelle l'élément d'inspection de mélange (12) est raccordé de manière opérationnelle à l'au moins un raccordement de drainage (18).

3. Écumoire (2) selon la revendication 1 ou 2, dans laquelle l'écumoire (2) comprend en outre le conduit de drainage et l'élément d'inspection de mélange est raccordé au conduit de drainage.

4. Écumoire (2) selon l'une quelconque des revendications précédentes, dans laquelle le conduit de drainage et/ou l'au moins un raccordement de drainage (18) et/ou le tuyau capteur comprend un contrôleur d'écoulement conçu pour contrôler une quantité du mélange qui passe à travers le conduit de drainage et/ou l'au moins un raccordement de drainage (18), et/ou le tuyau capteur pendant l'utilisation.

5. Écumoire (2) selon l'une quelconque des revendications précédentes, dans laquelle le tuyau capteur s'étend partiellement au sein du conduit de drainage et/ou de l'au moins un raccordement de drainage (18).

6. Écumoire (2) selon l'une quelconque des revendications précédentes, dans laquelle le tuyau capteur est conçu pour drainer la pompe (16) et/ou le récipient tampon (4) après utilisation de ceux-ci.

7. Écumoire (2) selon l'une quelconque des revendications précédentes, dans laquelle l'élément d'inspection de mélange (12) comprend une section transparente du conduit de drainage.

8. Écumoire (2) selon l'une quelconque des revendications précédentes, dans laquelle l'élément de flottaison comprend un flotteur (8) et un dispositif de réglage de hauteur (10) conçu pour régler une distance relative entre le flotteur (8) et le récipient tampon (4).

9. Écumoire (2) selon les revendications précédentes, dans laquelle le dispositif de réglage de hauteur (10) comprend un système hydraulique (10a, 10b, 10c) et/ou
dans laquelle le dispositif de réglage de hauteur (10) comprend une tige (52) raccordée au flotteur (8) et au récipient tampon (4), et dans laquelle au moins l'un des raccords entre le flotteur (8) et la tige et le récipient tampon (4) et la tige comprend un raccordement fileté (32).

10. Écumoire (2) selon l'une quelconque des revendications précédentes, dans laquelle l'écumoire (2) comprend en outre un système d'injection de liquide conçu pour injecter du liquide dans le conduit de drainage et augmenter la vitesse d'écoulement dans le conduit de drainage, dans laquelle le système d'injection d'eau est de préférence positionné entre l'élément d'inspection de mélange (12) et une extrémité externe du conduit de drainage.

11. Écumoire (2) selon l'une quelconque des revendications précédentes, dans laquelle l'écumoire (2) comprend en outre au moins une entrée de liquide raccordée au récipient tampon (4) et qui est positionnée sous la surface de liquide pendant l'utilisation, et dans laquelle chacune de l'au moins une entrée de liquide comprend un mécanisme de vanne pour fermer l'entrée pendant le pompage, dans laquelle les une ou plusieurs pompes (16) comprennent de préférence une pompe hydraulique et dans laquelle le mécanisme de vanne est raccordé à un système hydraulique de l'au moins une pompe à l'aide d'un collecteur hydraulique et dans laquelle le mécanisme de vanne est conçu pour se fermer en fonction d'une utilisation de l'au moins une pompe (16), et/ou dans laquelle l'au moins une entrée de liquide comprend de préférence une vanne à sens unique conçue pour être fermée par la pression dans une ou plusieurs de l'au moins une pompe (16), l'au moins un raccordement de drainage (18), et/ou le conduit de drainage.

12. Écumoire (2) selon l'une quelconque des revendications précédentes, dans laquelle le récipient tampon (4) est au moins partiellement entouré d'une cage et/ou d'un récipient externe, et dans laquelle de préférence le récipient externe (28) comprend une ou plusieurs ouvertures, et dans laquelle de préférence un espace partiellement ouvert existe entre le récipient externe (28) et le récipient tampon (4) conçu pour être rempli d'un liquide lorsque l'écumoire (2) est déployée.

13. Écumoire (2) selon l'une quelconque des revendications précédentes, dans laquelle l'ouverture d'entrée (34) définit un canal d'entrée (36), et dans laquelle le canal d'entrée (36) comprend une restriction sur une certaine distance, dans laquelle le canal d'entrée (36) est de préférence défini par le récipient tampon (4) et l'élément flottant, et dans laquelle l'élément flottant comprend plus préférablement un bord (18) ayant une surface de bord qui fait un angle d'au moins 70° avec une direction d'écoulement d'entrée moyenne (58) du mélange s'écoulant dans le récipient tampon (4).

14. Procédé d'élimination d'une substance à partir d'une surface liquide, le procédé comprenant les étapes consistant à :
- fournir une écumoire (2) selon l'une quelconque des revendications précédentes ;
- positionner l'écumoire (2) dans le liquide ;
- laisser le mélange s'écouler dans le récipient tampon (4) ;
- pomper le mélange à partir du récipient tampon (4) ;
- observer une consistance de mélange à travers l'élément d'inspection de mélange (12).

15. Procédé selon la revendication 14, comprenant en outre une ou plusieurs des étapes consistant à :
- diriger une sortie du conduit de drainage correspondant à l'observation de la consistance de mélange ;
- adapter une distance entre le récipient tampon (4) et l'élément flottant à l'aide du contrôleur de hauteur ;
- adapter une quantité de mélange dans le récipient tampon (4) en modifiant une vitesse de pompage de la pompe (16).
